# EUROPÄISCHE PATENTSCHRIFT

(11) **EP 2 039 972 B1**
(45) Veröffentlichungstag und Bekanntmachung des Hinweises auf die Patenterteilung: **16.10.2013**
(21) Anmeldenummer: 08013215.2
(22) Anmeldetag: 23.07.2008
(51) Int. Cl.: F16L 21/035

(54) **Dichtungsvorrichtung für eine Steckverbindung**
Seal device for a connector
Dispositif d'étanchéité pour une connexion enfichable

(30) Priorität: 24.08.2007 DE 102007040033
(43) Veröffentlichungstag der Anmeldung: 25.03.2009
(73) Patentinhaber: Aerotechnik E. Siegwart GmbH, 66299 Friedrichsthal (DE)
(72) Erfinder: Siegwart, Wolfgang, 66280 Sulzbach (DE)
(74) Vertreter: Bernhardt, Winfrid

(56) Entgegenhaltungen:
- EP-A1- 0 678 180
- DE-A1- 3 506 339
- GB-A- 1 141 462
- US-A1- 2006 214 423
- US-B1- 6 168 208
- US-B1- 6 176 523

## Beschreibung

Die Erfindung betrifft eine Dichtungsvorrichtung für einen Ringspalt zwischen zwei an einer Steckverbindung ineinandergeschobenen Rohren, insbesondere für Luftleitungssysteme, mit einem inneren Rohr und einem an diesem gehaltenen, elastischen Ring, der auf seiner äußeren Seite mit mindestens einer abstehenden Dichtlippe versehen ist.

Bei einer solchen durch Benutzung bekannten Dichtungsvorrichtung wird der Ring mit einem flachen Metallband befestigt, das um den Ring gespannt und an seinen beiden Enden durch den Ring und das Rohr hindurch punktgeschweißt wird.

Bei einer weiteren solchen Dichtungsvorrichtung wird der Rand des Rohres gebördelt und über eine Seite des Rings gequetscht.

Bei einer dritten durch Benutzung bekannten Dichtungsvorrichtung wird der Ring auf dem Rohr festgeklebt.

Aus der WO 94/15133 geht eine Dichtungsvorrichtung der eingangs genannten Art hervor, bei der ein mit zwei abstehenden Dichtlippen versehener, auf einem inneren Rohr angeordneter Ring durch einen Klemmstreifen auf dem inneren Rohr befestigt wird.

Die US 2006/0214423 A1 beschreibt eine Dichtungsvorrichtung, die einen auf einem inneren Rohr anzuordnenden elastischen Ring umfasst, der mit zwei abstehenden Dichtlippen versehen ist. Der Ring ist auf seiner Innenseite mit einer im Querschnitt gesehen gekrümmten Form versehen, die an eine Formung der äußeren Seite des inneren Rohrs angepasst ist, um einen stabilen Sitz des Rings aus dem Rohr zu ermöglichen.

Weitere Dichtungsvorrichtungen der eingangs genannten Art gehen aus der US 6,176,523 B1, DE 35 06 339 A1, GB 1 141 462 A sowie der US 6,168,208 B 1 hervor.

Der Erfindung liegt die Aufgabe zugrunde, eine vereinfachte, aber in ihrer Funktionsfähigkeit nicht beeinträchtigte Dichtungsvorrichtung der eingangs genannten Art zu schaffen, deren Ring sich stabiler auf dem inneren Rohr anordnen lässt.

Die Aufgabe wird erfindungsgemäß dadurch gelöst, dass der Ring ein festeres Material als die Dichtlippe und/oder in Ansicht eines Querschnitts in radialer Richtung des Rings eine größere Querschnittsfläche als die Dichtlippe, im Fall einer Mehrzahl von Dichtlippen als die Gesamtheit der Dichtlippen, aufweist und der Innenradius des Rings um so viel kleiner ist als der Außenradius des inneren Rohrs an der Stelle, an der der Ring auf dem inneren Rohr aufsitzt, dass der Ring eine das innere Rohr mit festem Sitz umspannende Manschette bildet, wobei in Ansicht in dem Querschnitt die dem inneren Rohr zugewandte Seite des Rings konkav gewölbt ist.

Zur Befestigung der erfindungsgemäßen Dichtungsvorrichtung am Rohr muss weder der Ring mit einer Spannschelle versehen noch das Rohr über den Ring umgebördelt werden, und es sind auch keine sonstigen Maßnahmen wie Verkleben o.ä. notwendig.

Durch die konkave Wölbung wird der Sitz des Ringes auf dem Rohr noch mehr stabilisiert. Der Ring weist auf seinen Außenseiten einen geringeren Innendurchmesser und dementsprechend eine größere Dicke auf und stößt dort gegen eine entsprechend höhere Seitenwand der Sicke.

Der Ring mit der Dichtlippe oder den Dichtlippen sitzt dicht und fest auf dem Rohr und wird beim Zusammenschieben der Rohrenden nicht verschoben oder verkippt.

Maßgeblich dafür ist die im Vergleich zum Stand der Technik ausgeprägt starke Dimensionierung oder andere Verstärkung des Ringes gegenüber der Dichtlippe bzw. den Dichtlippen: Die durch die Klemmung des Ringes auf dem inneren Rohr erzeugte, ggf. wie weiter unten angegeben ergänzte, Kraft, die den Ring gegen Verschieben hält, ist größer als die Kraft, die beim Aufschieben des äußeren Rohrs auf das innere zum Umbiegen der Dichtlippe(n) und zum Überwinden der durch das Anliegen der Dichtlippe(n) an dem äußeren Rohr erzeugte Reibungskraft benötigt wird. Bei der Herstellung von Komponenten für Rohrleitungssysteme, wie Abzweigungen, Krümmern, Reduktionsstücken, Kupplungsstücken usw., braucht der Ring nur in einfacher Weise in einem einzigen Arbeitsgang, in der Regel maschinell, auf das Rohr gespannt werden.

Sofern es bei der Montage erforderlich wird, ist jedoch in Einzelfällen auch ein Aufbringen des Rings von Hand durchaus möglich. Muss die Dichtung wegen einer Beschädigung, z.B. bei der Lagerung oder beim Transport, ausgewechselt werden, so ist es daher, anders als bei den mechanisch am Rohr befestigten Vorrichtungen, nicht nötig, das gesamte Teil auszutauschen bzw. muss nicht, wie bei den festgeklebten Ringen, der Ring und der Klebstoff aufwendig vom Rohr entfernt und ein neuer Ring aufgeklebt werden. Die beschädigte Dichtungsvorrichtung wird einfach vom Rohr abgenommen und eine neue wird aufgesetzt.

Daraus ergibt sich der weitere Vorteil, dass weniger Aufwand für eine schonende Lagerung und ein vorsichtiges Handling der mit der Dichtungsvorrichtung versehenen Teile getrieben werden muss.

Es hat sich gezeigt, dass ein gemäß der DIN EN 12237 gemessener Leckluftstrom in allen Druckbereichen höchstens ein Fünftel dessen beträgt, was die höchste Dichtigkeitsklasse D als Grenze fordert.

Zweckmäßigerweise ist der Ring mit zwei Dichtlippen versehen.

Einem Verkippen nur am Rand wird außerdem durch die weitere Ausgestaltung vorgebeugt, dass die Dichtlippe bzw. die Dichtlippen in Abstand von den seitlichen Rändern des Ringes angeordnet sind. Zugleich sind damit die Dichtlippen an beiden Seiten und damit stärker in ihre Basis eingebunden als bei einer Anordnung ganz am Rand. Sie sind vom Ansatz her biegesteifer gehalten.

Der Abstand zwischen den Dichtlippen sollte zumindest so groß sein wie die Dichtlippen lang sind. Die Dichtlippen liegen dann nicht eine über der anderen, wenn sie durch das äußere Rohr umgebogen werden.

Der oben geforderte größere Querschnitt des Ringes im Vergleich zu der Dichtlippe bzw. den Dichtlippen ist ein Richtmaß, das die Voraussetzung für die gewünschte Klemmkraft des Ringes und die für seine Aufgabe, eine Basis für die Dichtlippe(n) zu bilden, erforderliche Festigkeit darstellt. Es versteht sich, dass die Realisierung der Querschnittsfläche durch Breite und Dicke des Ringes vernünftigerweise auf eine flache Querschnittsform beschränkt ist. Die vorstehenden konkreteren Angaben zu den Abmessungen stehen damit im Einklang.

In einer besonders bevorzugten Ausgestaltung der Erfindung umfasst die Vorrichtung eine im inneren Rohr geformte, für die Aufnahme des Rings vorgesehene Sicke, die vorzugsweise steile Seitenwände aufweist, an die sich der Ring anlegt. Die Sicke stabilisiert den Sitz des Ringes zusätzlich, da sich der Ring beim Aufschieben oder Abziehen des äußeren Rohrs gegen die entsprechende Sickenwand abstützten kann. Diese Abstützung ergänzt die durch die Klemmung des Ringes auf dem inneren Rohr erzeugte Reibungskraft, wie weiter oben angedeutet.

Da der Ring in der Sicke angeordnet ist und infolgedessen höchstens noch mit einem Teil seiner Dicke über das Rohr übersteht, kann das äußere Rohr in geringerem Abstand vom inneren Rohr geführt werden.

Zweckmäßigerweise ist der Außenradius des zum Einsatz in der Sicke vorgesehenen Rings ebenso groß wie oder kleiner als der Außenradius des inneren Rohrs in Bereichen neben der Sicke. Damit stehen nur noch die Dichtlippen nach außen über; das äußere Rohr kann noch knapper auf dem inneren sitzen.

In der Regel wird der Boden der Sicke zur Aufnahme des konkav gewölbten Rings eine konvexe Wölbung aufweisen und so ein Gegenstück zu dem konkaven Ringquerschnitt bilden.

Vorzugsweise weist dann das innere Rohr zur Aufnahme einer umgebogenen Dichtlippe zumindest auf einer Seite neben der Sicke einen verringerten Außenradius auf.

Zweckmäßigerweise ist zur Begrenzung des Überlappungsbereichs der beiden Rohre in der Steckverbindung am inneren und/oder am äußeren Rohr ein Anschlag vorgesehen, vorzugsweise in der Form eines aufgewölbten Bundes am inneren Rohr. Vorzugsweise ist die Dichtungsvorrichtung in der Mitte des Überlappungsbereichs angeordnet. Falls es zu einer Verkantung zwischen den beiden Rohren kommt, können hier die Dichtlippen am wenigsten einerseits niedergedrückt werden und andererseits mit zu wenig Kraft an dem äußeren Rohr anliegen.

Der Ring und die Dichtlippe werden in der Regel aus Gummi, vorzugsweise Ethylen-Propylen-Dien-Kautschuk (EPDM), bestehen.

Zweckmäßigerweise werden der Ring und die Dichtlippe, auch bei Verwendung verschiedener Materialien für den Ring und die Dichtlippe, zusammen mittels Spritzguss hergestellt.

Die Zeichnungen geben Ausführungsbeispiele der Zeichnungen wieder. Es zeigen:
- Fig. 1: einen Teil einer Dichtungsvorrichtung nach der Erfindung im Querschnitt,
- Fig. 2: eine zwischen zwei Rohren eingesetzte Dichtungsvorrichtung in Seitenansicht,
- Fig. 3: einen Ausschnitt der Dichtungsvorrichtung gemäß Fig. 2 im Querschnitt,
- Fig. 4: eine weitere zwischen zwei Rohren eingesetzte Dichtungsvorrichtung in Seitenansicht,
- Fig. 5: die Dichtungsvorrichtung gemäß Fig. 4 in isometrischer Darstellung,
- Fig. 6: einen Ausschnitt der Dichtungsvorrichtung gemäß Fig. 4 im Querschnitt,
- Fig. 7 und 8: Teile weiterer Dichtungsvorrichtungen im Querschnitt, und
- Fig. 9: einen Ausschnitt einer Dichtungsvorrichtung mit einem Teil gemäß Fig. 8 im Querschnitt.

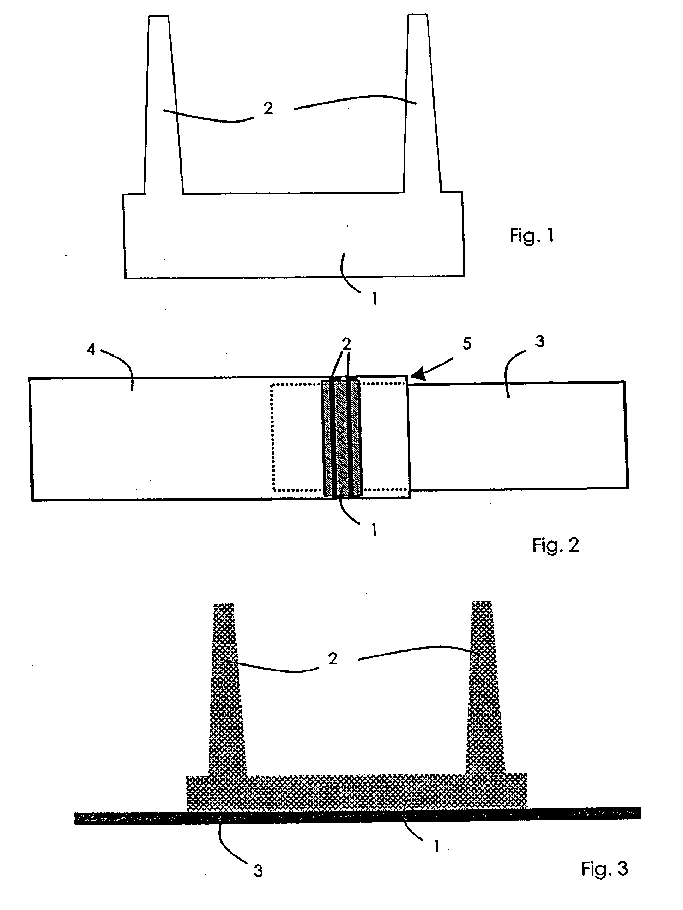

In Fig. 1 ist im Querschnitt ein Ring 1 mit zwei von seiner Außenseite senkrecht abstehenden Dichtlippen 2 dargestellt. Der Ring 1 weist eine rechteckige Form auf, die wesentlich breiter als hoch ist. Die Dichtlippen 2 sind nahe den beiden Seiten des Rings 1 in Abstand von dem seitlichen Rand angeordnet. Sie verjüngen sich nach oben hin.

Fig. 2 zeigt zwei Rohre 3 und 4, wobei auf das innere Rohr 3 eine erfindungsgemäße Dichtungsvorrichtung gemäß Fig. 1 mit dem Ring und den Dichtlippen aufgespannt ist. Der Ring 1 sitzt fest auf dem Rohr 3 auf und schließt dicht mit ihm ab. Das innere Rohr 3 ist in das äußere Rohr 4 eingeschoben. Die Dichtlippen 2 legen sich dabei an die Innenwand des äußeren Rohrs 4 an und dichten den Ringspalt 5 zwischen den beiden Rohren vollständig ab.

In Fig. 3 ist zu sehen, wie ein Ring 1 auf das innere Rohr 3 aufgespannt ist. Der Ring 1 ist im Vergleich zu dem Ring aus Fig. 1 dünner. Der feste Sitz auf dem Rohr 3 wird hier dadurch sichergestellt, dass ein festeres Material gewählt ist als für die aus EPDM gebildeten Dichtlippen 2.

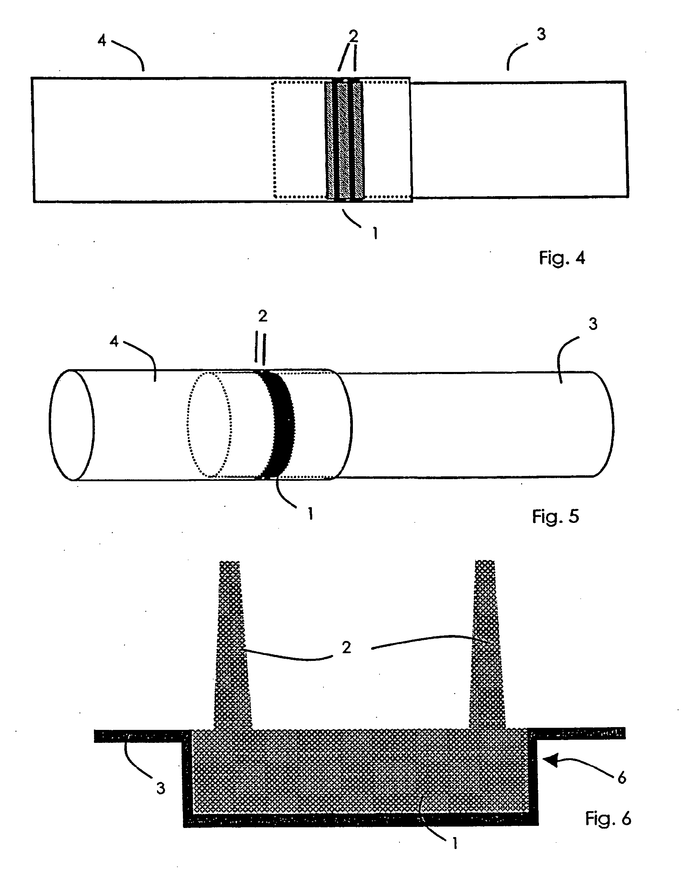

Die in den Fig. 4 bis 6 gezeigte Dichtungsvorrichtung umfasst eine Sicke 6 im inneren Rohr 3, die die gleiche Breite und Höhe wie der Ring 1 aufweist. Sowohl am Boden der Sicke 6 als auch an ihren Seitenwänden schließt der Ring dicht mit dem inneren Rohr 3 ab. Wie insbesondere die Fig. 4 und 5 erkennen lassen, kann somit im Vergleich zu dem Ausführungsbeispiel gemäß Fig. 2 das innere Rohr 3 einen größerem Radius haben. Der Ring 1 schließt auf seiner Außenseite neben der Sicke 6 bündig mit dem Außenradius des Rohrs 3 ab. Lediglich die Lippendichtungen 2 stehen ab und legen sich, wenn das innere Rohr 3 in das äußere Rohr 4 geschoben wird, an die Innenwand des äußeren Rohrs 4 an.

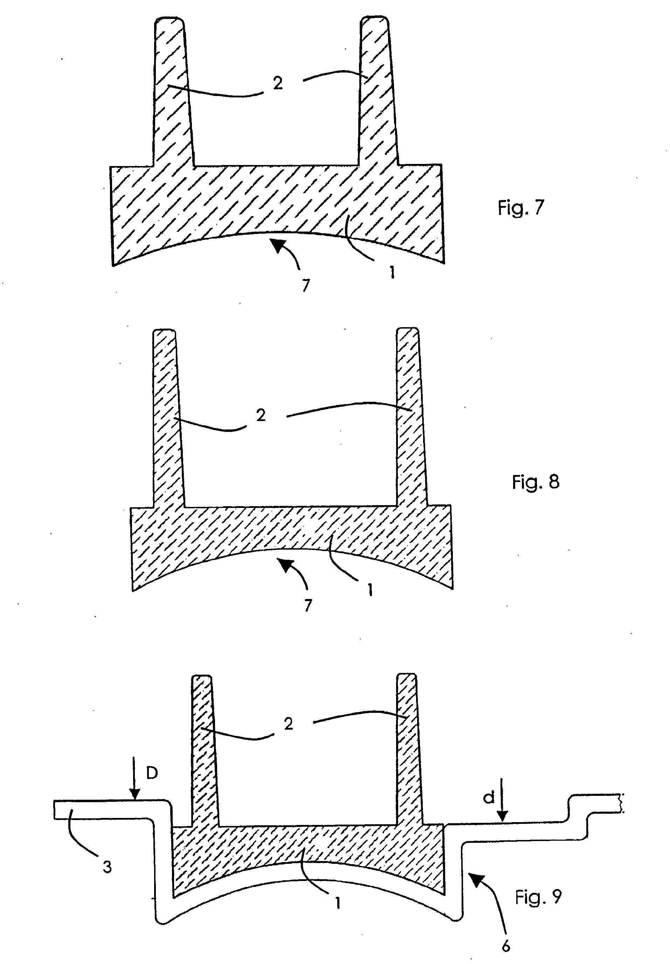

In den Fig. 7 bis 9 sind weitere Beispiele für die Gestaltung des Ringes 1 und der Dichtlippen 2 dargestellt. Um einen noch besseren Halt an dem Rohr 3 zu erzielen, ist der Ring 1 auf der dem Rohr 3 zugewandten Seite konkav gewölbt und, wie in Fig. 9 zu sehen, ist die Sicke 6 an ihrem Boden mit einer der konkaven Wölbung des Ringes entsprechenden konvexen Wölbung versehen, so dass sie den Ring bündig aufnehmen kann. Der Ring ist hier nach den Seiten hin noch effektiver abgestützt.

Um einen engeren Sitz des äußeren Rohrs 4 auf dem inneren Rohr 3 zu ermöglichen, ist, wie in Fig. 9 gezeigt, der Ring 1 in der Sicke 6 gegenüber dem Umfang D des Rohrs 3 so weit nach innen versetzt, dass der Umfang d des Rings kleiner als der des Rohrs 3 ist. Dadurch wird Platz für die Verbiegung der Dichtlippen 2 innerhalb des Profils des inneren Rohrs 3 geschaffen, der am Zwischenraum zwischen den Rohren eingespart werden kann. Außerdem weist das Rohr 3 auf der rechten Seite neben der Sicke 6 den gleichen geringeren Umfang d auf wie der Ring 1. Dieser nach innen versetzte Bereich ist dafür vorgesehen, die bei Aufschieben des äußeren Rohres 4 umgeklappte rechte Dichtlippe 2 aufzunehmen. Die linke Dichtlippe 2 legt sich auf den Ring 1.
Beiderseits der Dichtlippen 2 kann das äußere Rohr mit engem Spiel an dem Umfang D des inneren Rohres 3 anliegen.

Wie insbesondere in Fig. 7 und 8 zu sehen ist, sind für den Ring 1 und die Dichtlippen 2 unterschiedliche Größen, Dicken und Anordnungen vorstellbar. So sind die Dichtlippen 2 und der Ring 1 in dem Ausführungsbeispiel gemäß Fig. 8 wesentlich dünner ausgestaltet als in dem Beispiel gemäß Fig. 7. Außerdem sind die Dichtlippen 2 gemäß Fig. 8 länger als die gemäß Fig. 7. Bei allen Ausführungsbeispielen außer nach Fig. 3 ist der Querschnitt des Ringes 1 mehr als doppelt so groß wie der Querschnitt der Dichtlippen 2 zusammen.
Der Abstand zwischen den Dichtlippen 2 ist allerdings stets zumindest so groß wie die Länge der Dichtlippen 2, damit sich diese nicht übereinander legen, wenn die Rohre (3,4) ineinander geschoben sind.

## Patentansprüche

1. Dichtungsvorrichtung für einen Ringspalt (5) zwischen zwei an einer Steckverbindung ineinandergeschobenen Rohren (3,4), insbesondere für Luftleitungssysteme, mit einem inneren Rohr (3) und einem an diesem gehaltenen, elastischen Ring (1), der auf seiner äußeren Seite mit mindestens einer abstehenden Dichtlippe (2) versehen ist, wobei der Ring (1) ein festeres Material als die Dichtlippe (2) und/oder in Ansicht eines Querschnitts in radialer Richtung des Rings (1) eine größere Querschnittsfläche als die Dichtlippe (2), im Fall einer Mehrzahl von Dichtlippen (2) als die Gesamtheit der Dichtlippen (2), aufweist und der Innenradius des Rings (1) um so viel kleiner ist als der Außenradius des inneren Rohrs (3) an der Stelle, an der der Ring (1) auf dem inneren Rohr (3) aufsitzt, dass der Ring (1) eine das innere Rohr (3) mit festem Sitz umspannende Manschette bildet, **dadurch gekennzeichnet, dass** in Ansicht in dem Querschnitt die dem inneren Rohr (3) zugewandte Seite (7) des Rings (1) konkav gewölbt ist.

2. Vorrichtung nach Anspruch 1,
**dadurch gekennzeichnet,**
**dass** der Ring (1) mit zwei Dichtlippen (2) versehen ist.

3. Vorrichtung nach einem der Ansprüche 1 oder 2,
**dadurch gekennzeichnet,**
**dass** der Ring (1) im Wesentlichen eine rechteckige Querschnittsform aufweist, wobei deren zum Rohr (3) parallele Seiten, vorzugsweise um ein Mehrfaches, länger sind als die zum Rohr (3) senkrechten.

4. Vorrichtung nach einem der Ansprüche 1 bis 3,
**dadurch gekennzeichnet,**
**dass** die Dichtlippe bzw. die Dichtlippen (2) in Abstand von den seitlichen Rändern des Rings (1) angeordnet sind.

5. Vorrichtung nach einem der Ansprüche 2 bis 4,
**dadurch gekennzeichnet,**
**dass** der Abstand zwischen den Dichtlippen (2) zumindest so groß ist wie die Dichtlippen (2) lang sind.

6. Vorrichtung nach einem der Ansprüche 1 bis 5,
**dadurch gekennzeichnet,**
**dass** die Vorrichtung eine am inneren Rohr (3) geformte, für die Aufnahme des Rings (1) vorgesehene Sicke (6) umfasst, die vorzugsweise steile Seitenwände aufweist.

7. Vorrichtung nach Anspruch 6,
**dadurch gekennzeichnet,**
**dass** der Außenradius des zum Einsatz in der Sicke (6) vorgesehenen Rings (1) ebenso groß wie oder kleiner ist als der Außenradius des inneren Rohrs (3) außerhalb der Sicke (6).

8. Vorrichtung nach Anspruch 7,
**dadurch gekennzeichnet,**
**dass** das innere Rohr (3) zur Aufnahme einer umgebogenen Dichtlippe (2) zumindest auf einer Seite neben der Sicke (6) einen verringerten Außenradius aufweist.

9. Vorrichtung nach einem der Ansprüche 6 bis 8,
**dadurch gekennzeichnet,**
**dass** der Boden der Sicke (6) eine konvexe Wölbung aufweist, die zu der konkav gewölbten, dem inneren Rohr (3) zugewandten Seite (7) des Rings (1) komplementär ist.

10. Vorrichtung nach einem der Ansprüche 7 oder 8,
**dadurch gekennzeichnet,**
**dass** zur Begrenzung des Überlappungsbereichs der beiden Rohre in der Steckverbindung am inneren und/oder am äußeren Rohr (3,4) ein Anschlag vorgesehen ist, vorzugsweise in der Form eines aufgewölbten Bundes am inneren Rohr.

11. Vorrichtung nach einem der Ansprüche 1 bis 10,
**dadurch gekennzeichnet,**
**dass** der Ring (1) und die Dichtlippe (2) zusammen mittels Spritzguss, vorzugsweise aus Gummi, vorzugsweise Ethylen-Propylen-Dien-Kautschuk (EPDM), hergestellt sind.

## Claims

1. Seal device for an annular gap (5) between two pipes (3, 4) inserted one into the other at a plug connection, in particular for air line systems, having an inner pipe (3) and, held on the latter, an elastic ring (1) which is provided, on its outer side, with at least one projecting sealing lip (2), wherein the ring (1) has a more solid material than the sealing lip (2) and/or a greater cross-sectional area, as seen in cross section in the radial direction of the ring (1), than the sealing lip (2) or, in the case of a plurality of sealing lips (2), than the collection of sealing lips (2), and wherein the internal radius of the ring (1) is smaller than the external radius of the inner pipe (3), at the point where the ring (1) sits on the inner pipe (3), by enough such that the ring (1) forms a collar which securely wraps around the inner pipe (3), **characterized in that**, as seen in cross section, the curvature of that side (7) of the ring (1) which faces the inner pipe (3) is concave.

2. Device according to Claim 1, **characterized in that** the ring (1) is provided with two sealing lips (2).

3. Device according to either of Claims 1 and 2, **characterized in that** the ring (1) is substantially rectangular in cross section, wherein the sides of the ring which are parallel to the pipe (3) are longer, preferably several times longer, than those perpendicular to the pipe (3).

4. Device according to one of Claims 1 to 3, **characterized in that** the sealing lip or lips (2) is/are arranged at a distance from the lateral edges of the ring (1).

5. Device according to one of Claims 2 to 4, **characterized in that** the distance between the sealing lips (2) is at least as large as the sealing lips (2) are long.

6. Device according to one of Claims 1 to 5, **characterized in that** the device comprises a bead (6), which is formed on the inner pipe (3), is provided for receiving the ring (1) and preferably has steep side walls.

7. Device according to Claim 6, **characterized in that** the external radius of the ring (1) provided for use in the bead (6) is equal to or smaller than the external radius of the inner pipe (3) outside the bead (6).

8. Device according to Claim 7, **characterized in that** the inner pipe (3) for receiving a bent sealing lip (2) has, at least on one side adjacent to the bead (6), a reduced external radius.

9. Device according to one of Claims 6 to 8, **characterized in that** the base of the bead (6) has a convex curvature complementary to the concave curvature of that side (7) of the ring (1) facing the inner pipe (3).

10. Device according to either of Claims 7 and 8, **characterized in that** a stop is provided on the inner and/or on the outer pipe (3, 4) in order to limit the overlap region of the two pipes in the plug connection, this stop preferably being in the shape of a curved collar on the inner pipe.

11. Device according to one of Claims 1 to 10, **characterized in that** the ring (1) and the sealing lip (2) are produced together by means of injection moulding, preferably from rubber, preferably ethylene propylene diene rubber (EPDM).

## Revendications

1. Dispositif d'étanchéité pour une fente annulaire (5) entre deux tubes (3,4) glissés l'un dans l'autre au niveau d'un raccord enfichable, en particulier pour des systèmes de conduite à air, présentant un tube interne (3) et une bague (1) élastique fixée sur celui-ci, qui est pourvu sur sa face externe d'au moins une lèvre d'étanchéité (2) saillante, la bague (1) présentant un matériau plus solide que la lèvre d'étanchéité (2) et/ou présentant, dans une vue transversale dans le sens radial de la bague (1), une section transversale plus grande que la lèvre d'étanchéité (2), dans le cas d'une multitude de lèvres d'étanchéité (2) plus grande que la totalité des lèvres d'étanchéité (2), et le rayon interne de la bague (1) est plus petit que le rayon externe du tube interne (3) à l'endroit où la bague (1) se place sur le tube interne (3) d'une quantité telle que la bague (1) forme une manchette enserrant le tube interne (3) avec un ajustage solide, **caractérisé en ce que** dans la vue transversale, la face (7) de la bague (1) tournée vers le tube interne (3) présente une courbure concave.

2. Dispositif selon la revendication 1, **caractérisé en ce que** la bague (1) est pourvue de deux lèvres d'étanchéité (2).

3. Dispositif selon l'une quelconque des revendications 1 ou 2, **caractérisé en ce que** la bague (1) présente essentiellement une forme transversale rectangulaire, ses faces parallèles au tube (3) étant plus longues, de préférence d'un multiple, que celles perpendiculaires au tube (3).

4. Dispositif selon l'une quelconque des revendications 1 à 3, **caractérisé en ce que** la lèvre d'étanchéité ou les lèvres d'étanchéité (2) sont disposées à une certaine distance des bords latéraux de la bague (1).

5. Dispositif selon l'une quelconque des revendications 2 à 4, **caractérisé en ce que** la distance entre les lèvres d'étanchéité (2) est au moins aussi grande que la longueur les lèvres d'étanchéité (2).

6. Dispositif selon l'une quelconque des revendications 1 à 5, **caractérisé en ce que** le dispositif comprend une moulure (6) moulée sur le tube interne (3), conçue pour recevoir la bague (1), qui présente de préférence des parois latérales raides.

7. Dispositif selon la revendication 6, **caractérisé en ce que** le rayon externe de la bague (1) prévue pour être placée dans la moulure (6) est aussi grand ou plus petit que le rayon externe du tube interne (3) en dehors de la moulure (6).

8. Dispositif selon la revendication 7, **caractérisé en ce que** le tube interne (3) présente, pour recevoir une lèvre d'étanchéité repliée (2), un rayon externe plus petit, au moins sur un côté, à côté de la moulure (6).

9. Dispositif selon l'une quelconque des revendications 6 à 8, **caractérisé en ce que** le fond de la moulure (6) présente une courbure convexe, qui est complémentaire à la face (7) à courbure concave, orientée vers le tube interne (3) de la bague (1).

10. Dispositif selon l'une quelconque des revendications 7 ou 8, **caractérisé en ce que** pour limiter la zone de superposition de deux tubes dans la connexion enfichable, une butée est prévue sur le tube interne et/ou externe (3,4), de préférence sous forme d'une ceinture courbée sur le tube interne.

11. Dispositif selon l'une quelconque des revendications 1 à 10, **caractérisé en ce que** la bague (1) et la lèvre d'étanchéité (2) sont réalisées, ensemble, par moulage par injection, de préférence en caoutchouc, de préférence en caoutchouc d'éthylène-propylène-diène (EPDM).
